Europäisches Patentamt

European Patent Office

Office européen des brevets

(11) Veröffentlichungsnummer: **0 381 013**
**A1**

## (12) EUROPÄISCHE PATENTANMELDUNG

(21) Anmeldenummer: **90101283.1**

(22) Anmeldetag: **23.01.90**

(51) Int. Cl.⁵: **A01C 17/00**

(30) Priorität: **31.01.89 DE 3902756**

(43) Veröffentlichungstag der Anmeldung:
**08.08.90 Patentblatt 90/32**

(84) Benannte Vertragsstaaten:
**DE FR GB NL**

(71) Anmelder: **Amazonen-Werke H. Dreyer GmbH & Co. KG**
**Am Amazonenwerk 9-13**
**D-4507 Hasbergen-Gaste(DE)**

(72) Erfinder: **Dreyer, Heinz, Dipl.-Ing., Dr.**
**Am Amazonenwerk 7**
**D-4507 Hasbergen(DE)**

(54) **Schleuderdüngerstreuer.**

(57) Schleuderdüngerstreuer mit Vorratsbehälter, Dosiereinrichtung und mit Wurfschaufeln besetzte Schleuderscheiben, wobei die Schleuderscheiben mit den Wurfschaufeln oder die Wurfschaufeln in einfacher Weise gegen andere Schleuderscheiben mit Wurfschaufeln oder andere Wurfschaufeln insbesondere mit anderen äußeren Rotationsradien auswechselbar sind. Um den gattungsgemäßen Schleuderdüngerstreuer auf einfachste Weise für das Bestreuen von großen Arbeitsbreiten von bis zu 36 m und mehr einzurichten, ist vorgesehen, daß für größere Arbeitsbreiten bei der Normaldüngung auch Wurfschaufeln (15) mit größeren aufrechten Abwurfwinkeln ($\alpha'$) eingesetzt werden.

FIG. 4

## Schleuderdüngerstreuer

Die Erfindung betrifft einen Schleuderdüngerstreuer mit Vorratsbehälter, Dosiereinrichtung und mit Wurfschaufeln besetzte Schleuderscheiben, wobei die Schleuderscheiben mit den Wurfschaufeln oder die Wurfschaufeln in einfacher Weise gegen andere Schleuderscheiben mit Wurfschaufeln oder andere Wurfschaufeln insbesondere mit anderen äußeren Rotationsradien auswechselbar sind.

Durch den Prospekt "AMAZONE ZA-U, Die konsequente Weiterentwicklung der AMAZONE-Zentrifugalstreuer-Technik!" der Amazonen-Werke mit dem Druckvermerk D 526·12.86 ist ein Schleuderdüngerstreuer mit einem Wechselstreuscheibensystem bekannt, bei dem sich Düngemittel durch den Einsatz verschiedener Streuscheiben über unterschiedliche Arbeitbreiten abschleudern lassen. Für die jeweiligen Arbeitsbreiten werden mit Wurfschaufeln unterschiedlicher Länge bestückte Schleuderscheiben benutzt, die auf einfachste Weise gegeneinander austauschbar sind, so daß die Maschine für ganz spezielle Düngersorten und für jede gewünschte Arbeitsbreite zwischen 10 und 24 m präzise einstellbar ist. Die auf den Schleuderscheiben befestigten Wurfschaufeln bestehen jeweils aus zwei Teilen und zwar aus dem jeweils auf der Schleuderscheibe befestigten inneren Teil und dem schwenkbar an diesem inneren Teil befestigten äußeren Teil, der sog. Schwenkschaufel. Mittels der an den Wurfschaufeln angeordneten Schwenk schaufeln ist es möglich, die sog. Spätdüngung in ca. 1m hoch aufgewachsen Kulturpflanzenbestände durchzuführen, ohne daß der Schleuderdüngerstreuer gegenüber der Normaldüngung, welche auf Ackerböden ohne oder mit sehr niedrigem Pflanzenbewuchs erfolgt, angehoben werden muß, wodurch sich eine ungünstige Schwerpunktsverlagerung ergeben würde. Durch das Hochschwenken der Schwenkschaufeln wird der aufrechte Abwurfwinkel der Düngemittelpartikel von den Schleuderscheiben vergrößert, wodurch das gesamte Streubild des Schleuderdüngerstreuers gegenüber der Normaldüngung angehoben wird, so daß die Düngemittelpartikel auf diese Weise schonend von oben in den Kulturpflanzenbestand hineingelagen. Diese an den Wurfschaufeln der Schleuderscheiben angeordneten Schwenkschaufeln lassen sich werkzeuglos von ihrer Normal- in die Spätdüngungsposition und umgekehrt verschwenken, wobei die jeweilige Position immer exakt einstellbar ist. Die verschiedenen Arbeitsbreiten von 10 bis 24 m lassen sich durch Auswechseln der mit unterschiedlich langen Wurfschaufeln bestückten Schleuderscheiben erreichen. Bei diesen mit Wurfschaufeln unterschiedlicher Länge bestückten Schleuderscheiben werden die Düngemittelpartikel bei der Normaldüngung für alle Arbeitsbreiten mit dem gleichen aufrechten Abwurfwinkel von den Schleuderscheiben abgeschleudert. Zur Durchführung der Spätdüngung werden die an den Wurfschaufeln angeordneten Schwenkschaufeln für alle Arbeitsbreiten derart nach oben verschwenkt, daß die Düngemittelpartikel bei der Spätdüngung auch unabhängig von der jeweiligen Arbeitsbreite mit dem gleichen, gegenüber der Normaldüngung größeren Abwurfwinkel von den Schleuderscheiben abgeschleudert werden.

Die verschiedenen Arbeitsbreiten werden also durch den Einsatz von Schleuderscheiben mit unterschiedlich langen Wurfschaufeln erreicht, wobei die Länge der einzelnen, auf den Schleuderscheiben angeordneten Wurfschaufeln mit größer werdenden Arbeitsbreiten zunimmt. Sollen nun noch größere Arbeitsbreiten mit diesem Schleuderdüngerstreuer bestreut werden, müßten logischer Weise nur die Wurfschaufeln entsprechend der gewünschten größeren Arbeitsbreite verlängert werden. Dieses ist aber aus baulichen Gründen des Schleuderdüngerstreuers nur bis zu einer bestimmten Wurfschaufellänge möglich. Mit dieser, aus konstruktiven Gründen eingeschränken Länge der Wurfschaufeln ist es jedoch nicht möglich, die großen Arbeitsbreiten von bis zu 36 m und mehr bei der Normaldüngung zu erreichen. Auch eine Erhöhung der Drehzahl der Schleuderscheiben verbietet sich, weil die Düngerkörner bei dieser höheren Drehzahl zerschlagen werden.

Der Erfindung liegt nun die Aufgabe zugrunde, den gattungsgemäßen Schleuderdüngerstreuer auf einfachste Weise für das Bestreuen von großen Arbeitsbreiten von bis zu 36 m und mehr bei der Normaldüngung einzurichten.

Diese Aufgabe wird in erfindungsgemäßer Weise dadurch gelöst, daß für größere Arbeitsbreiten bei der Normaldüngung auch Wurfschaufeln mit größeren aufrechten Abwurfwinkeln eingesetzt werden.

Infolge dieser Maßnahme wird auf einfachste Weise erreicht, daß sich durch eine Vergrößerung des Abwurfwinkels in aufrechter Ebene bei der Normaldüngung auch die großen Arbeitsbreiten von bis zum 36 m und mehr exakt ausstreuen lassen. Dadurch, daß das ganze Streubild des Schleuderdüngerstreuers geringfügig angehoben wird, werden die Düngemittelpartikel in exakter Weise über diese großen Arbeitsbreiten verteilt, da die Flugkurve der Düngemittelpartikel verlängert wird. Diese Vergrößerung des aufrechten Abwurfwinkels für große Arbeitsbreiten bei der Normaldüngung bewegt sich im Bereich weniger Grade, gegenüber dem Abwurfwinkel bei der Normaldüngung für die Arbeitsbreiten von 10 bis 24 m. Es wird also von dem bisher beschrittenen Weg, längere Wurfschaufeln oder höhere Drehzahl = größere Abwurfgeschwindigkeit für die Düngerkörner, abgegangen.

Weiterhin ist erfindungsgemäß vorgesehen, daß für die Normaldüngung bei größeren Arbeitsbreiten Wurfschaufeln mit größerem Abwurfwinkel und bei der Spätdüngung jedoch Wurfschaufeln mit zumindest etwa gleichgroßem Abwurfwinkel wie bei kleineren Arbeitsbreiten eingestetzt werden. Eine Vergrößerung des aufrechten Abwurfwinkels für die Spätdüngung bei großen Arbeitsbreiten ist gegenüber dem Abwurfwinkel der Düngemittelpartikel für die kleineren Arbeitsbreiten nicht notwendig. Hier reicht die konstruktive Maßnahme hinsichtlich der möglichen Wurfschaufelverlängerung aus, um die großen Arbeitsbreiten ordnungsgemäß auszustreuen.

In einer besonders bevorzugten Ausführungsform ist erfindungsgemäß vorgesehen, daß die unterschiedlich großen Abwurfwinkel ausschließlich durch eine entsprechende Abwinkelung des jeweils äußeren Teiles der Wurfschaufeln eingestellt werden. Hierdurch ergibt sich eine einfache, unkomplizierte Einstellmöglichkeit für die unterschiedlichen Abwurfwinkel der Düngemittel von den Schleuderscheiben. Hierbei ist dann erfindungsgemäß vorgesehen, daß das äußere Ende jeder Wurfschaufel verschwenkbar gegenüber dem inneren Teil ausgebildet ist, wobei das äußere Teil in zwei unterschiedliche Positionen (Normal- und Spätdüngung) einstellbar ist, wobei die jeweilige Position durch einen entsprechenden Anschlag bestimmt wird, und daß der Anschlag für größere Arbeitsbreiten anders angeordnet ist als für die kleineren Arbeitsbreiten in der Normaldüngungsposition. Hierdurch ist es dann möglich, mit ein und denselben Schleuderscheiben sowohl kleinere als auch größere Arbeitsbreiten, durch eine entsprechende Wahl der Position der Schwenkschaufel, auszustreuen.

Weitere Einzelheiten der Erfindung sind den übrigen Unteransprüchen, der Beispielsbeschreibung und den Zeichnungen zu entnehmen. Hierbei zeigt

Fig. 1 den in erfindungsgemäßer Weise ausgerüsteten Schleuderdüngerstreuer in Prinzipdarstellung in der Seitenansicht,

Fig. 2 Teilansicht der Schleuderscheibe mit Wurfschaufeln und Schwenkschaufeln für kleinere Arbeitsbreiten, wobei die Schwenkschaufeln sich in Normaldüngungsposition gemäß des Standes der Technik befindet,

Fig. 3 die Schleuderscheibe gemäß Fig. 2, jedoch mit zur Spätdüngung hochgeschwenkter Schwenkschaufel,

Fig. 4 eine andere Schleuderscheibe mit längeren Wurfschaufeln für größere Arbeitsbreiten und den erfindungsgemäß vergrößerten aufrechten Abwurfwinkel für die Normaldüngung und

Fig. 5 die Schleuderscheibe gemäß Fig. 4 in Spätdüngungsposition.

Der Schleuderdüngerstreuer weist den Vorratsbehälter 1, den Rahmen 2, die Dreipunktkupplungselemente 3 und die auf den Antriebswellen 4 der Getriebegehäuse 5 angeordneten Schleuderscheiben 6 mit ihren Wurfschaufeln 7 auf.

Das sich im Vorratsbehälter 1 befindliche, auszubringende Material wird in bekannter und daher nicht näher dargestellter Weise über die sich im unteren Bereich der trichterförmigen Behälterteile 8 angeordneten, mittels Schieber in unterschiedlichen Öffnungsweiten einstellbaren Ausströmöffnungen auf die Schleuderscheiben 6 aufgegeben, die quer zur Fahrtrichtung 9 in einem Abstand zueinander nebeneinander angeordnet sind. Die Schleuderscheiben 8 rotieren in entgegengegesetztem Drehsinn, wobei die aus der Auslauföffnung herausrieselnden Düngemittelpartikel zunächst auf die Schleuderscheibe 6 gelangen und von den Wurfschaufeln 7 in Breitverteilung gleichmäßig über die zu bestreuende Fläche ausgestreut werden.

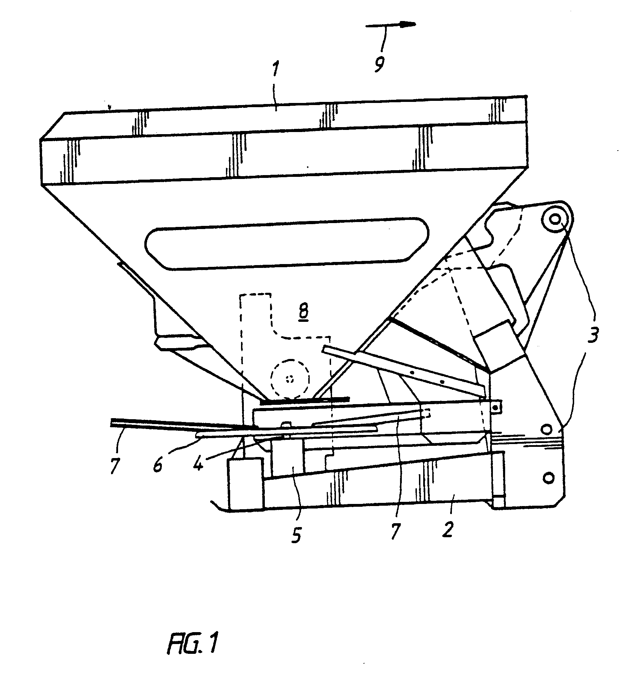

Die Fig. 2 zeigt eine Schleuderscheibe 10, die auf die Antriebswelle 4 des Schleuderdüngerstreuers gemäß Fig. 1 anbringbar ist. Diese Schleuderscheibe 10 weist die beiden Wurfschaufeln 11 auf. Die Wurfschaufeln 11 bestehen jeweils aus dem auf der Schleuderscheibe 10 befestigten inneren Teil 12 und den um die Achse 13 in aufrechter Ebene schwenkbaren äußeren Teil 14, der sog. Schwenkschaufel. Bei dieser Schleuderscheibe 10 mit den Wurfschaufeln 11 handelt es sich um eine Schleuderscheibe für die kleineren Arbeitsbreiten, beispielsweise von 10 bis 24 m. In der in Fig. 2 dargestellten Position der Schwenkschaufel 14 ist die Schleuderscheibe 10 für das Normaldüngen eingestellt. Hierbei werden die Düngemittelpartikel mit dem geringen aufrechten Abwurfwinkel $\alpha$ von der Schleuderscheibe 10 abgeschleudert.

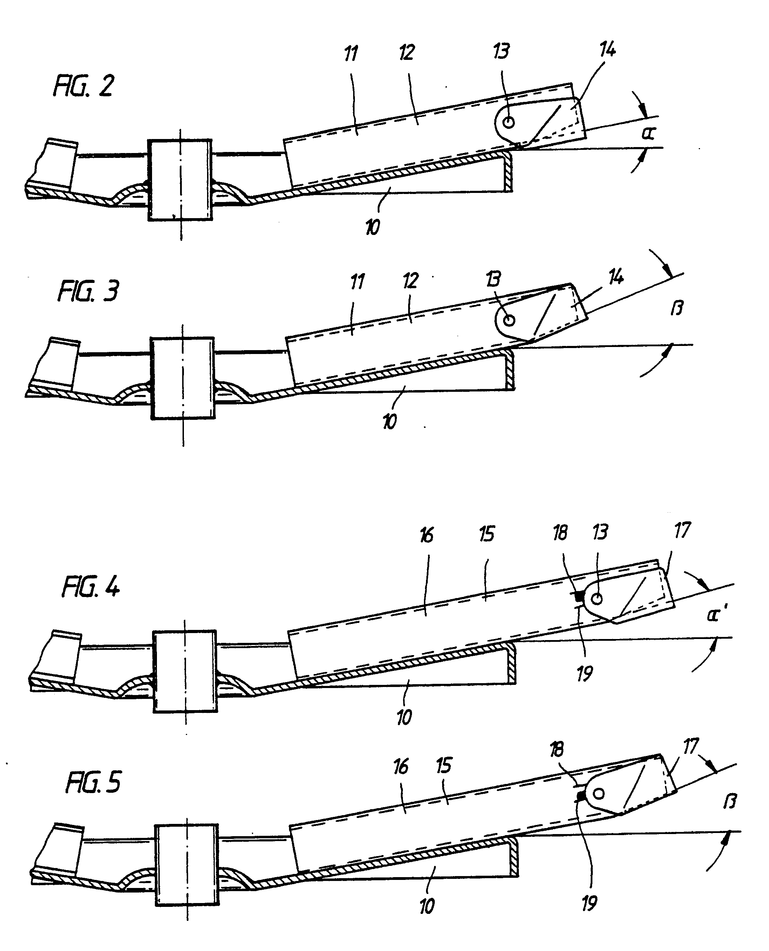

Für das Spätdüngen bei den kleineren Arbeitsbreiten von 10 bis 24 m wird für die sog. Spätdüngung die Schwenkschaufel 14 gemäß Fig. 3 nach oben verschwenkt, so daß die Düngemittelpartikel mit dem in bezug auf die Normaldüngungsstellung der Schwenkschaufel 14 größeren aufrechten Abwurfwinkel $\beta$ von der Schleuderscheibe 10 abgeschleudert werden. Dieser größere Abwurfwinkel $\beta$ sorgt dafür, daß das ganze Streubild des von den Schleuderscheiben 10 des Schleuderdüngerstreuers erzeugten Streubildes angehoben wird, so daß die Düngemittelpartikel auch noch in beispielsweise 1 m hoch aufgewachsene Kulturen schonend von oben in den Bestand eindringen.

Sollen nun die Düngemittelpartikel mittels dieses Schleuderdüngerstreuers über größere Arbeitsbreiten bis zu 36 m und mehr verteilt werden, ist es aus baulichen Gründen nicht möglich, die Wurfschaufeln 7 bzw. 11 der Schleuderscheiben 6 bzw. 10 beliebig zu verlängern, da die Bauhöhe H, nur eine bestimmte Wurfschaufellänge zuläßt. Für die großen Arbeitsbreiten von bis zu 36 m und mehr wird nun die Streuscheibe 10 mit den längeren Wurfschaufeln 15, die aus dem auf der Schleuderscheibe 10 befestigten inneren Teil 16 und dem schwenkbaren äußeren Teil 17, der sog. Schwenkschaufel besteht, gemäß Fig. 4, eingesetzt. Die Wurfschaufel 15 unterscheidet sich nicht nur durch ihre Länge von der Wurfschaufel 11, gemäß den Fig. 2 und 3, sondern die Schwenkschaufel 17, welche ebenfalls um die Achse 13 in aufrechter Ebene verschwenkbar ist, weist für die Normaldüngung bei großen Arbeitsbreiten den aufrechten Abwurfwinkel $\alpha'$, auf welcher größer ist als der Abwurfwinkel $\alpha$ gemäß Fig. 2, aber kleiner als der Abwurfwinkel $\beta$ der Wurfschaufel 11 gemäß Fig. 3. Der gegenüber dem Abwurfwinkel $\alpha$ geringfügig größere Abwurfwinkel $\alpha'$ bewirkt, daß das Streubild bei den großen Arbeitsbreiten von bis zu 36 m und mehr bei der Normaldüngung geringfügig abgehoben wird, so daß die Düngemittelpartikel auch in exakter Weise über diese großen Arbeitsbreiten verteilt werden.

Für die Spätdüngung bei großen Arbeitsbreiten wird die Schwenkschaufel 17 in die Position gemäß Fig. 5 gebracht und weist hierbei den aufrechten Abwurfwinkel $\beta$ auf. Dieser Abwurfwinkel $\beta$ unterscheidet sich nicht von dem Abwurfwinkel $\beta$ der für die Spätdüngung hochgeschwenkten Schwenkschaufel 14 für die kleineren Arbeitsbreiten gemäß Fig. 3. Damit nun die jeweiligen Postionen für die Normal-und Spätdüngung fehlerlos wiederholbar einstellbar ist, sind die Anschläge 18 und 19 an der Wurfschaufel 15 angeordnet. Hierbei stellt der Anschlag 18 die Markierung für die Normaldüngungsposition und der Anschlag 19 die Markierung für die Spätdüngungsposition dar.

## Ansprüche

1. Schleuderdüngerstreuer mit Vorratsbehälter, Dosiereinrichtung und mit Wurfschaufeln besetzte Schleuderscheiben, wobei die Schleuderscheiben mit den Wurfschaufeln oder die Wurfschaufeln in einfacher Weise gegen andere Schleuderscheiben mit Wurfschaufeln oder andere Wurfschaufeln insbesondere mit anderen äußeren Rotationsradien auswechselbar sind, dadurch gekennzeichnet, daß für größere Arbeitsbreiten bei der Normaldüngung auch Wurfschaufeln (15) mit größeren aufrechten Abwurfwinkeln ($\alpha'$) eingesetzt werden.

2. Schleuderdüngerstreuer nach Anspruch 1, dadurch gekennzeichnet, daß für die Normaldüngung bei größeren Arbeitsbreiten Wurfschaufeln (15) mit größerem Abwurfwinkel ($\alpha'$) und bei der Spätdüngung jedoch Wurfschaufeln (15) mit zumindest etwa gleichgroßem Abwurfwinkel ($\beta$) wie bei kleineren Arbeitsbreiten eingesetzt werden.

3. Schleuderdüngerstreuer mit Vorratsbehälter, Dosiervorrichtung und mit Wurfschaufeln besetzten Schleuderscheiben, welche den Dünger in Breitverteilung abschleudern, wobei bei der sog. Spätdüngung die Düngerteilchen mit einem größeren Abwurfwinkel als bei der sog. Normaldüngung abgeschleudert werden und wobei bis etwa 24 m Arbeitsbreite bei den unterschiedlichen Zwischenarbeitsbreiten jeweils für Normaldüngung gleichgroße Abwurfwinkel gewählt werden, dadurch gekennzeichnet, daß für größere Arbeitsbreiten bei der Normaldüngung auch Wurfschaufeln (15) mit größeren aufrechten Abwurfwinkeln ($\alpha'$) eingesetzt werden.

4. Schleuderdüngerstreuer nach Anspruch 3, dadurch gekennzeichnet, daß für die Normaldüngung bei größeren Arbeitsbreiten Wurfschaufeln (15) mit größerem Abwurfwinkel ($\alpha'$) und bei der Spätdüngung jedoch Wurfschaufeln (15) mit zumindest etwa gleichgroßem Abwurfwinkel ($\beta$) wie bei kleineren Arbeitsbreiten eingesetzt werden.

5. Schleuderdüngerstreuer nach einem oder mehreren der vorstehenden Ansprüche, dadurch gekennzeichnet, daß die unterschiedlich großen Abwurfwinkel ($\alpha$, $\alpha'$,$\beta$) ausschließlich durch eine entsprechende Abwinkelung des jeweils äußeren Teiles (14,17) der Wurfschaufeln (12,15) eingestellt werden.

6. Schleuderdüngerstreuer nach einem oder mehreren der vorstehenden Ansprüche, dadurch gekennzeichnet, daß unterschiedlich geformte Wurfschaufeln (11,15) oder Schleuderscheiben (10) mit unterschiedlich ausgebildeten Wurfschaufeln (11,15) eingesetzt werden, die gegeneinander austauschbar sind.

7. Schleuderdüngerstreuer nach einem oder mehreren der vorstehenden Ansprüche, dadurch gekennzeichnet, daß das äußere Ende (14,17) jeder Wurfschaufel (12,15) verschwenkbar gegenüber dem inneren Teil (12,16) ausgebildet ist, wobei das äußere Teil (14,17) in zwei unterschiedliche Positionen (Normal- und Spätdüngung) einstellbar ist, wobei die jeweilige Position durch einen entsprechenden Anschlag (18,19) bestimmt wird, und daß der Anschlag für größere Arbeitsbreiten anders angeordnet ist als für die kleineren Arbeitsbreiten in der Normaldüngungsposition.

*FIG. 1*

EP 0 381 013 A1

FIG. 2

11  12  13  14

α

10

FIG. 3

11  12  13  14

ß

10

FIG. 4

16  15  18  13  17

α'

19

10

FIG. 5

16  15  18  17

ß

19

10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2450551 (AMAZONEN-WERKE) <br> * Seite 5, Zeile 3 - Seite 9, Zeile 37; Figuren 1-13 * | 1-7 | A01C17/00 |
| X | EP-A-017128 (AMAZONEN-WERKE) <br> * Seite 6, Zeile 21 - Seite 10, Zeile 26; Figuren 1-3 * | 1-7 | |
| X | EP-A-158335 (AMAZONEN-WERKE) <br> * Seite 9, Zeile 2 - Seite 17, Zeile 20; Figuren 1-18 * | 1-7 | |

RECHERCHIERTE SACHGEBIETE (Int. Cl.5)

A01C

Der vorliegende Recherchenbericht wurde für alle Patentansprüche erstellt

| Recherchenort | Abschlußdatum der Recherche | Prüfer |
|---|---|---|
| DEN HAAG | 09 MAI 1990 | VERMANDER R.H. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
 
& : Mitglied der gleichen Patentfamilie, übereinstimmendes
    Dokument

EPO FORM 1503 03.82 (P0403)